# EUROPEAN PATENT SPECIFICATION

(11) **EP 2 531 405 B1**
(45) Date of publication and mention of the grant of the patent: **24.08.2016**
(21) Application number: 11703391.0
(22) Date of filing: 03.02.2011
(51) Int. Cl.: B65B 7/28, B65B 29/00, C09K 3/10, B65D 53/02, B65D 53/04, C08K 5/103, C08L 27/06, C08L 67/02

(54) **PACKAGING COMPRISING A LID SEAL FOR PACKAGING LIPOPHILIC MATERIALS AND PROCESS FOR PRODUCING THE PACKAGING**
VERPACKUNG MIT DECKELDICHTUNG ZUR VERPACKUNG VON LIPOPHILEN MATERIALIEN UND VERFAHREN ZU DESSEN HERSTELLUNG
EMBALLAGE AVEC UN JOINT DE COUVERCLES POUR CONDITIONNEMENT DE MATIÈRES LIPOPHILES ET PROCÉDÉ POUR SA FABRICATION

(30) Priority: 11.10.2010 DE 102010047882; 03.02.2010 DE 102010006833
(43) Date of publication of application: 12.12.2012
(73) Proprietor: Emery Oleochemicals GmbH, 40599 Düsseldorf (DE)
(72) Inventor: DAUTE, Peter, 27616 Beverstedt (DE); SCHÄFER, Martin, 27616 Stubben (DE)
(74) Representative: Kinkeldey, Daniela
(86) International application number: PCT/EP2011/000480
(87) International publication number: WO 2011/095332

(56) References cited:
- EP-A1- 1 672 014
- JP-A- 7 188 390
- JP-A- 2002 060 728
- US-A- 2 686 168
- US-A- 5 430 098
- US-A- 5 576 367
- US-A1- 2009 324 917

## Description

The present invention relates to a process for the production of a packaging filled with a lipophilic packed product, a packaging which is obtainable by this process and is filled with a lipophilic packed product and a packaging comprising a container and a closure, wherein the closure has a seal.

Plasticizers are substances which are admixed to brittle and hard plastics, such as, for example, polyvinyl chloride (PVC), to impart to these properties which are desirable for processing and use, such as flexibility and extensibility. The industrially relevant plasticizers and their use are known and are described, for example, in David F. Cadogan, Christopher J. Howick: "Plasticizers", Ullmann's Encyclopedia of Industrial Chemistry, electronic release, 6th ed., chap. 1 - 6, Wiley-VCH, Weinheim 2003 and L. Meier: "Weichmacher", in R. Gächter, H. Müller (ed.): Taschenbuch der Kunststoffadditive, 3rd edition, p. 341 et seq., Hanser, Munich 1990.

In the field of PVC packagings or when PVC articles come into contact with oil or gasoline, the oil or the gasoline may dissolve plasticizers out of the PVC article. PVC lid seals are a particular problem in this connection, especially if these lid seals have a large area and there is only little oil or gasoline in the packaging. In order to prevent or minimize this migration of plasticizer out of the seals into the packed product, polymeric plasticizers are employed. These polymeric plasticizers are usually high molecular weight polyesters of diols and dicarboxylic acids which are characterized by a relatively low tendency towards migration. The disadvantage of polymeric plasticizers, however, is that they are characterized by a comparatively high viscosity and are therefore only poorly processable. An addition of non-polymeric, low-viscosity plasticizers would indeed reduce the viscosity of the polymeric plasticizers to a certain extent and thus improve their processability, but this would be at the expense of an increased migration of the plasticizer from the seal into the packed product. This migration of plasticizers into the packed product may be particularly pronounced especially if the packed product is, for example, a foodstuff which is heated in an autoclave at a temperature of as a rule about 120 °C, for the purpose of sterilization, while it is in the packaging.

US 5,430,098 discloses container closures, sealed containers and sealing compositions for them.

The present invention was based on the object of overcoming the disadvantages resulting from the prior art in connection with lid seals, in particular in connection with PVC-based lid seals, in packagings which contain in particular lipophilic liquids, such as, for example, oils or gasoline, as the packed product.

One object according to the invention was chiefly based on providing a process with the aid of which a lipophilic packed product can be stored for a long time and without the risk of contamination with plasticizers, often also at higher temperatures.

In particular, the present invention was based on the object of providing a packaging comprising a container and a closure, wherein the closure has a preferably PVC-based seal, wherein the plasticizers contained in this PVC-based seal are characterized by particularly good migration properties with respect to a lipophilic packed product. The seals should furthermore be characterized by a flexibility in order to ensure a closure of the container which is as air-tight as possible.

Generally, a contribution towards achieving at least one of the above objects is made by the appended claims. The sub-claims dependent upon these are in each case preferred embodiments of the present invention.

A contribution towards achieving the objects described above is made by a process for the production of a packaging which is at least partly filled with a lipophilic packed product and comprises a container and a closure having a seal, comprising as process steps
i) provision of a container which has an opening and which is at least partly filled with a lipophilic packed product;
ii) provision of a closure which is suitable for closing the container having the opening;
iii) application of a composition to at least a part of the inner surfaces of the closure, wherein the composition is obtainable by mixing a particulate thermoplastic polymer with a plasticizer composition comprising a polymeric plasticizer and a polyol ester;
iv) heating of the composition applied to at least a part of the inner surfaces of the closure to a temperature which is sufficient to gel the composition;
v) cooling of the gelled composition;
vi) closing of the container with the closure;
and wherein the polyol ester is an ester of a C₁-C₁₀-monocarboxylic acid and a diol, triol or tetraol.

In process step i), a container which has an opening and which is at least partly filled with a lipophilic packed product is provided. In principle, this container can of course also be provided while or after carrying out process steps ii) to v).

All the container forms known to the person skilled in the art are possible as the container. Thus, the container can be, for example, a can, a bottle, for example a glass bottle, a canister, a drum, for example a plugged drum, or the like. There are also in principle no limitations with respect to the material from which the container is produced. The container can thus be produced, for example, from metal, from plastic or from glass. The container can optionally also be produced from the composition described in connection with process steps ii) to v).

This container is filled at least partly, preferably to the extent of at least 50 vol.%, particularly preferably to the extent of at least 75 vol.% and most preferably to the extent of at least 90 vol.% (in each case based on the maximum volume with which the container can be filled) with a lipophilic packed product. The lipophilic packed product is preferably a lipophilic substance which is liquid at 20 °C. Possible liquid lipophilic substances here are all liquids which lead to a two-phase system in a mixture with water. Lipophilic substances which are particularly preferred according to the invention are oils, in particular edible oils of vegetable or animal origin, hydrocarbons or hydrocarbon mixtures, such as, for example, gasoline. Possible lipophilic packed products are furthermore fat-containing foodstuffs, in particular foodstuffs with a fat content of at least 10 wt.%, particularly preferably at least 25 wt.% and most preferably at least 50 wt.%, in each case based on the total weight of the foodstuff. Examples of such foodstuffs which may be mentioned are, for example, cheese, meat or sausage.

In process step ii), a closure which is suitable for closing the container having the opening is provided.

There are also no limitations with respect to the closure. The closure can thus be, for example, a screw lid closure which has an internal or external thread and can be screwed on to a corresponding external or internal thread of the container opening. Closures, for example, in the form of a simple, as a rule conically constructed stopper which is inserted into corresponding container openings are furthermore possible. Possible closures are furthermore, in particular, the so-called "crown corks" known in connection with beer bottles, which as a rule are a circular piece of sheet metal, the edge of which is bent in the form of a crown.

In the case of a bottle, it may be particularly advantageous if this comprises an external thread in the top region and such a bottle is provided with a closure which can be screwed on to the container via a corresponding internal thread. In the case of a plugged drum it may in turn be particularly advantageous if this drum comprises a plug hole connector with external thread sunk into a plug housing, and a screw lid which conventionally has a flat upper lid disc with a flanged edge with internal thread extending on the periphery at right angles thereto is employed as the closure, so that the screw lid can be screwed on to the plug hole connector.

In process step iii) of the process according to the invention, a composition is now applied to at least a part of the inner surfaces of the closure, wherein the composition is obtainable by mixing a particulate thermoplastic polymer with a plasticizer composition comprising a polymeric plasticizer and a polyol ester;
According to the invention, *"inner surfaces*" are understood as meaning those surfaces inside the closure which may possibly come into contact with the lipophilic packed substance when the container closed with the closure is swivelled or shaken.

The plasticizer composition according to the present invention comprises as one component a polymeric plasticizer, which is preferably a polyester of a dicarboxylic acid and at least one diol, the dicarboxylic acid preferably being a C₂-C₂₀-dicarboxylic acid and the diol preferably being a C₂-C₂₀-diol. In this context, the end groups of the polyester can contain an ester with a monofunctional organic compound. This closing of the end groups can be via a monoalcohol in the case of an excess of acid and via a monocarboxylic acid in the case of an excess of alcohol, as is described, for example, in GB 1 173 323 or US 5,281,647.

In this connection, preferred dicarboxylic acids are, in particular, dicarboxylic acids chosen from the group consisting of oxalic acid, malonic acid, succinic acid, glutaric acid, adipic acid, pimelic acid, suberic acid, azelaic acid, sebacic acid, dodecandioic acid, 1,3-cyclohexanedicarboxylic acid, brassylic acid, hexahydrophthalic acid, terephthalic acid, phthalic acid and a mixture of at least two of these dicarboxylic acids, while preferred diols are, in particular, diols chosen from the group consisting of 1,2-ethanediol, 1,2-propanediol, 1,3-propanediol, 1,2-butanediol, 1,3-butanediol, 1,4-butanediol, 1,2-pentanediol, 1,3-pentanediol, 2-methyl-1,3-pentanediol, 1,4-pentanediol, 1,5-pentanediol, neopentyl glycol, 1,2-hexanediol, 1,3-hexanediol, 1,4-hexanediol, 1,5-hexanediol, 1,6-hexanediol, diethylene glycol, triethylene glycol, dipropylene glycol, tripropylene glycol, polyethylene glycols with a molecular weight in a range of from 200 to 1,000, polypropylene glycols with a molecular weight in a range of from 200 to 1,000, hydroxypivalic acid mononeopentyl glycol ester and a mixture of at least two of these diols.

The polyester plasticizers described above can be prepared industrially in a manner known per se by esterification of the dicarboxylic acid with the diol, optionally in the presence of suitable closing groups. In a preferred embodiment, for example, adipic acid and at least one diol from the group of 1,2-propanediol, 1,3-butanediol and 1,4-butanediol and optionally further diols or monocarboxylic acids, as closing groups, and esterification catalysts, for example dialkyl titanates, methanesulphonic acid or sulphuric acid, are initially introduced into a reaction tank and the mixture is first heated to temperatures of from, for example, 100 to 140 °C and homogenized by means of stirring. The reaction mixture is then heated to temperatures of from, for example, 160 to 190 °C under normal pressure. The esterification with splitting off of water starts at approx. 150 °C. The water of reaction formed is separated off by distillation over a column. The reaction mixture is then heated further to temperatures of from, for example, 200 to 250 °C, a vacuum of from, for example, 150 to 300 mbar is applied and further water of reaction is removed from the reaction mixture by means of passing through nitrogen. The reaction mixture is stirred in vacuo and while passing through nitrogen at temperatures of from, for example, 200 to 250 °C, until the acid number of the reaction mixture has reached a value of < 15 mg of KOH/g. For esterification of the free hydroxyl groups, the reaction mixture can then optionally preferably be pumped into a second tank and stirred at temperatures of from, for example, 200 to 250 °C under a vacuum of from, for example, 10 to 150 mbar and with removal of residual water by means of passing through an increased stream of nitrogen, until the acid number of the reaction mixture has reached a value of < 1.0 mg of KOH/g. Thereafter, the reaction product is preferably also filtered at temperatures of from, for example, 80 to 140 °C. Such a process is described in detail, for example, in WO-A-2003/018686.

According to the invention, it is furthermore preferable for the polyester plasticizer described above to have a viscosity, determined by the Brookfield method at 20 °C, of at least 500 mPas, particularly preferably of at least 750 mPas and most preferably of at least 1,000 mPas, where the viscosity of the polyester is conventionally in a range of from 500 to 20,000 mPas, preferably in a range of from 750 to 15,000 mPas and most preferably in a range of from 1,000 to 5,000 mPas.

The plasticizer composition according to the present invention comprises as a further component a polyol ester, which is an ester of a C₁-C₁₀-monocarboxylic acid and a diol, triol or tetraol.

In this connection, it is preferable for the C₁-C₁₀-monocarboxylic acid to be a monocarboxylic acid chosen from the group consisting of formic acid, acetic acid, propionic acid, butyric acid, hexanoic acid, pelargonic acid, 2-ethylhexanoic acid, nonanoic acid and a mixture of at least two of these monocarboxylic acids, and the diol, triol or tetraol to be a diol, triol or tetraol chosen from the group consisting of ethylene glycol, propylene glycol, diethylene glycol, dipropylene glycol, triethylene glycol, tripropylene glycol, glycerol, trimethylolpropane, diglycerol and a mixture of at least two of these triols or tetraols. Very particularly preferred polyol esters are triacetates and tripropionates of triols or tetraols, glycerol triacetate (triacetin), glycerol tripropionate or a mixture of glycerol triacetate and glycerol tripropionate being most preferred as the polyol ester.

The polyol esters are prepared from the monocarboxylic acids and the triols or tetraols by a simple esterification in the presence of suitable catalysts, such as is described, for example, for triacetin in DE-A-30 04 660. According to DE-A-30 04 660, triacetin can be obtained continuously by reaction of glycerol and acetic acid and post-acetylation with acetic anhydride. In this context, glycerol and acetic acid are reacted with one another in counter-current in the ratio of 2.5 : 1 to 5 : 1, for example liquid glycerol being passed in counter-current against an ascending stream of superheated acetic acid vapour in an esterification column equipped with a plurality of double bubble trays under a pressure of from 0.2 to 30 bar and at a temperature of from 180 to 250 °C. The dwell time of the reaction mixture is conventionally at least 1 hour. When an OH number of < 600 is reached, acetic anhydride is added to the mixture flowing down, at the bottom of the column or in a corresponding after-reactor, in an amount such that water dissolved in the liquid reaction phase and mono- and diacetin present can react quantitatively to give acetic acid. Preferably, 0.1 to 1.5 mol of acetic anhydride per mol of glycerol to be reacted are employed here. If catalysts are present, preferably 0.01 to 0.5 per cent by weight of p-toluenesulphonic acid, the pressure can be reduced to 0.2 to 3 bar and the reaction temperature can be reduced to 100 to 180 °C.

It is furthermore preferable according to the invention for the plasticizer composition to have a viscosity, determined by the Brookfield method at 20 °C, of less than 8,000 mPas, particularly preferably of less than 6,000 mPas and most preferably of less than 4,000 mPas.

The composition applied in process step iii) comprises as a further component a thermoplastic polymer. Thermoplastic polymers which are preferred in particular are polymers chosen from the group consisting of polyvinyl chloride (PVC), polypropylene (PP), polyethylene (PE), polyethylene terephthalate (PET), polylactate (PLA), polycarbonate, polystyrene, polyurethanes, polyethers, rubber, preferably natural rubber in the form of polyisoprene crosslinked by sulphur, or synthetic rubber based on acrylonitrile and 1,3-butadiene (NBR rubber), styrene and 1,3-butadiene, acrylic acid, styrene and acrylic acid or vinyl acetate, polybutadiene, copolymers of at least two of the above polymers, in particular polyethylene/polypropylene copolymers, and mixtures of at least two of these. PE, PP, PVC, PET, rubber und PLA are particularly preferred as thermoplastic polymers, PVC and rubber being most preferred.

PVC is obtained by homopolymerization of vinyl chloride. The PVC contained in the polymer composition according to the invention can be prepared, for example, by suspension polymerization, microsuspension polymerization, emulsion polymerization or bulk polymerization. The preparation of PVC by polymerization of vinyl chloride and the preparation and composition of plasticized PVC are described, for example, in Becker/Braun, Kunststoff-Handbuch, volume 2/1: "Polyvinylchlorid", 2nd edition, Carl Hanser Verlag, Munich. Depending on the content of plasticizers, in the case of mixtures containing a plasticizer and PVC a distinction is made between rigid PVC (< 0.1 % of plasticizer) and plasticized PVC (> 0.1 % of plasticizer).

In addition to the thermoplastic polymer and the plasticizer composition, the composition applied in process step iii) can furthermore comprise at least one additive which differs from these two components. Possible additives here are, in particular, further plasticizers which differ from the polymeric plasticizer, and stabilizers, lubricants, fillers, pigments, flame inhibitors, light stabilizers, blowing agents, polymeric processing auxiliary substances, impact improvers, optical brighteners, antistatics or biostabilizers. Additives which can be employed in this context are, in particular, those components which are described in WO-A-2003/018686 as suitable stabilizers, lubricants, fillers, pigments, flame inhibitors, light stabilizers, blowing agents, polymeric processing auxiliary substances, impact improvers, optical brighteners, antistatics or biostabilizers. The amounts in which these additives are preferably employed are also to be found in WO-A-2003/018686.

According to a preferred embodiment of the process according to the invention, the composition applied in process step iii) comprises
I) 40 to 90 wt.%, particularly preferably 45 to 80 wt.% and most preferably 50 to 70 wt.%, in each case based on the total weight of the composition, of a thermoplastic polymer,
II) 10 to 60 wt.%, particularly preferably 20 to 50 wt.% and most preferably 30 to 40 wt.%, in each case based on the total weight of the composition, of the plasticizer composition, and
III) 0 to 25 wt.%, particularly preferably 1 to 10 wt.% and most preferably 2 to 5 wt.%, in each case based on the total weight of the composition, of at least one additive which differs from components I) and II),
wherein the amount of components I), II) and III) adds up to 100 wt.%.

According to a further, particularly preferred embodiment of the process according to the invention, the composition applied in process step iii) is a paste-like composition with a Brookfield viscosity, determined at 40 °C, in a range of from 1,000 to 10,000 mPas, particularly preferably in a range of from 2,000 to 8,000 mPas and most preferably in a range of from 3,000 to 6,000 mPas.

The preparation of such polymer pastes, preferably such PVC pastes, can be carried out by the method and manner known to the person skilled in the art. For this, finely divided particles of the thermoplastic polymer, preferably particles with a particle size in a range of from 0.1 to 100 µm, particularly preferably in a range of from 1 to 30 µm, optionally together with the further additives, for example together with fillers, are conventionally dispersed in the plasticizer composition. Processes for the preparation of plasticized thermoplastic polymers, in particular plasticized polyvinyl chloride, are known, for example, from L. Meier: "Weichmacher", in R. Gächter, H. Muller (ed.): Taschenbuch der Kunststoffadditive, 3rd edition, p. 350 - p. 357, Hanser Verlag, Munich 1990. Further details of the preparation in particular of PVC pastes can also be found in chapter 7.3 "Herstellung von PVC-Pasten" in "Kunststoffhandbuch Polyvinylchlorid 2/2", editor Hans K. Felger, 1986, Karl Hanser Verlag Munich/Vienna.

The application of the polymer pastes to at least a part of the inner surfaces of the closure can be carried out by all processes which seem suitable to the person skilled in the art for applying a polymer paste to defined areas in the inside of a container lid. The polymer paste is particularly preferably applied by an injection moulding process to at least a part of the inner surfaces of the closure. Preferably, in this context, the composition is applied to at least a part of the inner surfaces of the closure such that in process step iv) a seal which, when the container is closed, lies on the opening of the container is formed from the gelled composition. Preferably, in this context, in process step iii) the composition is applied to a circular area or an annular area, where it may be advantageous in the case of both a circular and an annular area for the seal in the outer edge region, that is to say in particular in the region which comes into direct contact with the opening region of the container when the packaging is closed in the opening region, to be thicker than in the other seal regions.

In process step iv) of the process according to the invention, the composition applied to at least a part of the inner surfaces of the closure is heated to a temperature which is sufficient to gel the composition. During gelling, the particles of the thermoplastic polymer, preferably the PVC particles, dissolve at least partly in the plasticizer composition, so that a homogeneous, solid, more or less elastic plasticated material is obtained. In the case of PVC as the thermoplastic polymer, the temperature at which the polymer paste is heated in process step iv) is conventionally in a range of from 160 to 220 °C.

In process step v) of the process according to the invention, the gelled composition is then allowed to cool. After the cooling, a seal is obtained in the inside of the closure, which can be circular or annular, depending on the method and manner of the application of the composition in process step iii).

In process step vi) of the process according to the invention, the container which is at least partly filled with the lipophilic packed substance is then closed with the closure which now has the seal.

A contribution towards achieving the abovementioned objects is also made by a packaging comprising
- a container and
- a closure,
wherein the closure has a seal which is produced from a composition comprising
- a thermoplastic polymer, and
- a plasticizer composition comprising
   -- a polymeric plasticizer and
   -- a polyol ester,
and wherein the container is at least partly filled with a lipophilic packed product, and wherein the polyol ester is an ester of a C₁-C₁₀-monocarboxylic acid and a diol, triol or tetraol.

In this context, those containers, closures and lipophilic packed products which have already been mentioned above as preferred containers, closures and lipophilic packed products in connection with the process according to the invention are preferred as the container, closure and lipophilic packed product. The composition from which the seal is produced, and the form of the seal also preferably correspond to the composition and those forms which have already been described above as preferred compositions and as preferred forms in connection with the process according to the invention.

The invention is now explained in more detail with the aid of non-limiting figures and examples.

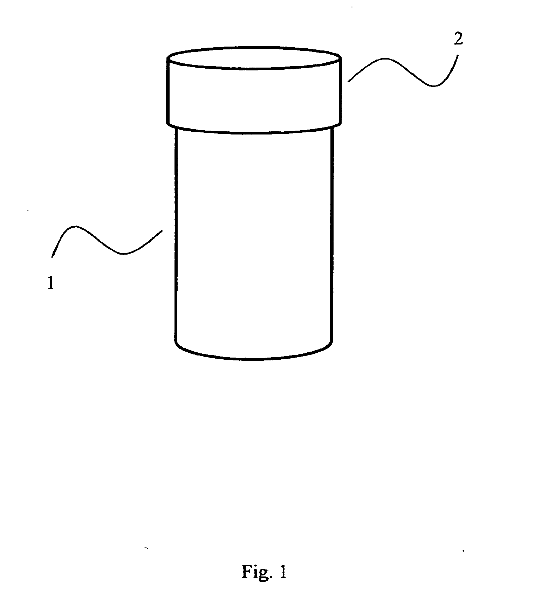

Figure 1 shows a packaging according to the invention comprising a container 1 and a closure 2 closing the container 1.

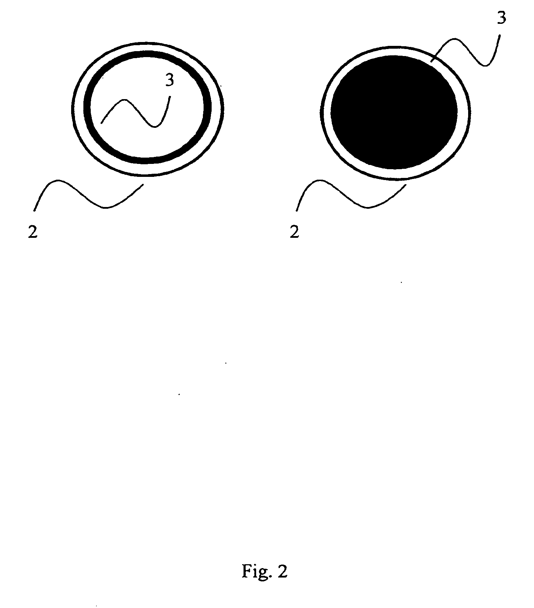

Figure 2 shows the closure 2 of the packaging according to the invention, seen from above. The seal 3, which has the form of a sealing ring in the left-hand diagram of Figure 2 and the form of a sealing disc in the right-hand diagram, can be seen.

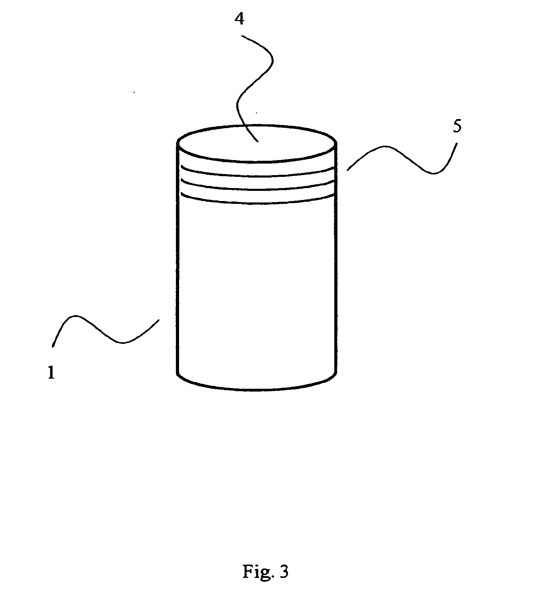

Figure 3 shows a container 1 of the packaging according to the invention which has an external thread 5 in the region of the opening 4. If a closure 1 with a corresponding internal thread is used, this container can be closed such that the seal 3 ensures an air-tight contact between the closure 2 and the container 1.

### EXAMPLES

### Examples 1 to 3

The following three plasticizer compositions are prepared by simple mixing:
Example 1 Edenol^{®}1215 (polymer plasticizer based on a polyol ester from Emery Oleochemicals Europe, Dusseldorf) - not according to the invention
Example 2 500 g of Edenol^{®}1215 + 200 g of triacetin - according to the invention
Example 3 500 g of Edenol^{®}1215 + 200 g of dibutyl sebacate - not according to the invention

The viscosity of the three plasticizer compositions is determined by the Brookfield method at 20 °C.

**Table 1**

| Example | Viscosity [mPas] |
|---|---|
| 1 | 1,288 |
| 2 | 432 |
| 3 | 211 |

### Examples 4 to 6

PVC pastes are prepared by means of the plasticizer compositions from Examples 1 to 3 with a dissolver from Werner Mathis AG (amount of material 200 g). The dispersing was carried out at room temperature (approx. 20 °C) and in vacuo (approx. 100 mbar). The compositions are described in the following (Examples 4 to 6):
Example 4: 100 parts by weight of PVC Solvin 271 PC, 3 parts by weight of Edenol D 81¹, 3 parts by weight of Stabiol VCZ 2001/1² and 70 parts by weight of the plasticizer composition from Example 1 - not according to the invention;
Example 5: 100 parts by weight of PVC Solvin 271 PC, 3 parts by weight of Edenol D 81, 3 parts by weight of Stabiol VCZ 2001/1 and 70 parts by weight of the plasticizer composition from Example 2 - according to the invention;
Example 6: 100 parts by weight of PVC Solvin 271 PC, 3 parts by weight of Edenol D 81, 3 parts by weight of Stabiol VCZ 2001/1 and 70 parts by weight of the plasticizer composition from Example 3 - not according to the invention;

The PVC pastes were gelled in a Mathis Thermotester (Wemer Mathis AG) to give sheeted-out compounds (180 °C, 3 minutes). The changes in weight of the sheeted-out compounds obtained in this way after storage in i-octane were determined for determination of the migration properties of the plasticizer. For this, the test specimens (3 x 10 cm) were stored in 200 ml of i-octane at 60 °C for 4 hours. Thereafter, the test specimens were dried first for 12 hours at room temperature and thereafter for 24 hours at 60 °C and the difference in weight was determined. The following values were determined:

**Table 2**

| | Example 4 | Example 5 | Example 6 |
|---|---|---|---|
| Weight of the test specimen beforehand [g] | 2.863 | 2.590 | 2.226 |
| Weight of the test specimen after storage in i-octane [g] | 2.737 | 2.471 | 1.968 |
| Weight decrease [g] | 0.126 | 0.119 | 0.258 |
| Weight decrease [%] | 4.4 | 4.6 | 11.6 |

The measurement results show that by means of the polyol esters of short-chain monocarboxylic acids (triacetin), it was possible significantly to reduce the viscosity of the polymer plasticizer Edenol^{®}1215 (see Table 1), while the migration properties into the lipophilic solvent i-octane did not deteriorate significantly (see Table 2). Other viscosity reducers which are not based on polyol esters of short-chain monocarboxylic acids (dibutyl sebacate) led to a significant deterioration in the migration properties of the plasticizer. The plasticizer combination according to the invention of polymeric plasticizer and polyol ester of short-chain monocarboxylic acids (triacetin) is therefore suitable in particular as a plasticizer for PVC pastes which are suitable for the production of lid seals for packagings, such as, for example, bottles, which are to be filled with lipophilic substances. Due to the low viscosity of the compositions, these can be applied by injection moulding processes in a particularly simple manner, and due to the advantageous migration properties with respect to lipophilic substances, only little plasticizer can migrate out of the seals into the packed product.

## Claims

1. A process for the production of a packaging which is at least partly filled with a lipophilic packed product and comprises a container (1) and a closure (2) having a seal (3), comprising as process steps
i) provision of a container (1) which has an opening (4) and which is at least partly filled with a lipophilic packed product;
ii) provision of a closure (2) which is suitable for closing the container (1) having the opening (4);
iii) application of a composition to at least a part of the inner surfaces of the closure (2), wherein the composition is obtainable by mixing a particulate thermoplastic polymer with a plasticizer composition comprising a polymeric plasticizer and a polyol ester;
iv) heating of the composition applied to at least a part of the inner surfaces of the closure (2) to a temperature which is sufficient to gel the composition;
v) cooling of the gelled composition;
vi) closing of the container (1) with the closure (2),
and wherein the polyol ester is an ester of a C₁-C₁₀-monocarboxylic acid and a diol, triol or tetraol.

2. The process according to claim 1, wherein the closure (1) is a screw lid closure or a crown cork.

3. The process according to claim 1 or 2, wherein the composition is applied to at least a part of the inner surfaces of the closure (2) such that in process step iv) a seal is formed from the gelled composition, which seal, when the container (1) is closed, lies on the opening (4) of the container (1).

4. The process according to one of the preceding claims, wherein in process step iii) the composition is applied to a circular area or an annular area.

5. The process according to one of the preceding claims, wherein the composition applied in process step iii) to at least a part of the inner surfaces of the closure (2) is a paste-like composition with a Brookfield viscosity, determined at 40 °C, in a range of from 1,000 to 10,000 mPas.

6. The process according to one of the preceding claims, wherein the thermoplastic polymer is polyvinyl chloride (PVC).

7. The process according to one of the preceding claims, wherein the polyol ester is glycerol triacetate.

8. The process according to one of the preceding claims, wherein the polymeric plasticizer is a polyester of a dicarboxylic acid and at least one diol.

9. The process according to claim 8, wherein the dicarboxylic acid is selected from the group consisting of oxalic acid, malonic acid, succinic acid, glutaric acid, adipic acid, pimelic acid, suberic acid, azelaic acid, sebacic acid, dodecandioic acid, 1,3-cyclohexanedicarboxylic acid, brassylic acid, hexahydrophthalic acid, terephthalic acid, phthalic acid and a mixture of at least two of these dicarboxylic acids;
and wherein
the diol is selected from the group consisting of 1 ,2-ethanediol, 1 ,2-propanediol, 1,3 - propanediol, 1 ,2-butanediol, 1,3-butanediol, 1 ,4-butanediol, 1 ,2-pentanediol, 1,3-pentanediol, 2-methyl-1,3-pentanediol, 1,4-pentanediol, 1,5-pentanediol, neopentyl glycol, 1,2- hexanediol, 1,3-hexanediol, 1 ,4-hexanediol, 1,5-hexanediol, 1,6-hexanediol, diethylene glycol, triethylene glycol, dipropylene glycol, tripropylene glycol, polyethylene glycols with a molecular weight in a range of from 200 to 1,000, polypropylene glycols with a molecular weight in a range of from 200 to 1,000, hydroxypivalic acid mononeopentyl glycol ester and a mixture of at least two of these diols.

10. The process according to one of the preceding claims, wherein the composition applied in process step iii) comprises
I) 40 to 90 wt.%, based on the total weight of the composition, of the thermoplastic polymer,
II) 10 to 60 wt.%, based on the total weight of the composition, of the plasticizer composition, and
III) 0 to 25 wt.%, based on the total weight of the composition, of at least one additive which differs from components I) and II), wherein the amount of components I), II) and III) adds up to 100 wt.%.

11. The process according to one of the preceding claims, wherein the lipophilic packed product is an oil or a hydrocarbon or hydrocarbon mixture.

12. A packaging comprising
- a container (1) and
- a closure (2),
wherein the closure (2) has a seal (3) which is produced from a composition comprising
- a thermoplastic polymer, and
- a plasticizer composition comprising
-- a polymeric plasticizer and
-- a polyol ester,
and wherein the container (1) is at least partly filled with a lipophilic packed product, and wherein the polyol ester is an ester of a C₁-C₁₀-monocarboxylic acid and a diol, triol or tetraol.

13. The packaging according to claim 12, wherein the seal (3) is mounted on the closure (2) in the form of a sealing ring or in the form of a sealing disc.

14. The packaging according to claim 12 or 13, wherein the thermoplastic polymer is polyvinyl chloride (PVC).

15. The packaging according to one of claims 12 to 14, wherein the polyol ester is glycerol triacetate.

16. The packaging according to one of claims 12 to 15, wherein the polymeric plasticizer is a polyester of a dicarboxylic acid and at least one diol.

17. The packaging according to one of claims 12 to 16, wherein the lipophilic liquid is an oil or a fat-containing foodstuff, a hydrocarbon or a hydrocarbon mixture.

## Patentansprüche

1. Verfahren zum Herstellen einer Verpackung, die wenigstens teilweise mit einem lipophilen verpackten Produkt gefüllt ist und einen Behälter (1) und einen Verschluss (2) mit einer Dichtung (3) umfasst, umfassend als Verfahrensschritte
i) Bereitstellen eines Behälters (1), der eine Öffnung (4) aufweist und der wenigstens teilweise mit einem lipophilen verpackten Produkt gefüllt ist;
ii) Bereitstellen eines Verschlusses (2), der zum Verschließen des Behälters (1), der die Öffnung (4) aufweist, geeignet ist;
iii) Aufbringen einer Zusammensetzung auf wenigstens einen Teil der Innenoberflächen des Verschlusses (2), wobei die Zusammensetzung durch Mischen eines partikelförmigen thermoplastischen Polymers mit einer Weichmacherzusammensetzung, die einen polymeren Weichmacher und einen Polyolester umfasst, erhältlich ist;
iv) Erhitzen der auf wenigstens einen Teil der Innenoberflächen des Verschlusses (2) aufgebrachten Zusammensetzung auf eine Temperatur, die ausreicht, um die Zusammensetzung zu gelieren;
v) Abkühlen der gelierten Zusammensetzung;
vi) Verschließen des Behälters (1) mit dem Verschluss (2),
und wobei der Polyolester ein Ester einer C₁-C₁₀-Monocarbonsäure und eines Diols, Triols oder Tetraols ist.

2. Verfahren gemäß Anspruch 1, wobei der Verschluss (1) ein Schraubdeckelverschluss oder ein Kronkorken ist.

3. Verfahren gemäß Anspruch 1 oder 2, wobei die Zusammensetzung so auf wenigstens einen Teil der Innenoberflächen des Verschlusses (2) aufgebracht wird, dass bei dem Verfahrensschritt iv) eine Dichtung aus der gelierten Zusammensetzung gebildet wird, welche Dichtung, wenn der Behälter (1) verschlossen ist, auf der Öffnung (4) des Behälters (1) liegt.

4. Verfahren gemäß einem der vorstehenden Ansprüche, wobei bei dem Verfahrensschritt iii) die Zusammensetzung auf einen kreisförmigen Bereich oder einen ringförmigen Bereich aufgebracht wird.

5. Verfahren gemäß einem der vorstehenden Ansprüche, wobei die Zusammensetzung, die bei dem Verfahrensschritt iii) auf wenigstens einen Teil der Innenoberflächen des Verschlusses (2) aufgebracht wird, eine pastenartige Zusammensetzung mit einer Brookfield-Viskosität, bestimmt bei 40 °C, in einem Bereich von 1.000 bis 10.000 mPas ist.

6. Verfahren gemäß einem der vorstehenden Ansprüche, wobei das thermoplastische Polymer Polyvinylchlorid (PVC) ist.

7. Verfahren gemäß einem der vorstehenden Ansprüche, wobei der Polyolester Glyceroltriacetat ist.

8. Verfahren gemäß einem der vorstehenden Ansprüche, wobei der polymere weichmacher ein Polyester einer Dicarbonsäure und wenigstens eines Diols ist.

9. Verfahren gemäß Anspruch 8, wobei die Dicarbonsäure ausgewählt ist aus der Gruppe bestehend aus Oxalsäure, Malonsäure, Bernsteinsäure, Glutarsäure, Adipinsäure, Pimelinsäure, Korksäure, Azelainsäure, Sebacinsäure, Dodecandisäure, 1,3-Cyclohexandicarbonsäure, Brassylsäure, Hexahydrophthalsäure, Terephthalsäure, Phthalsäure und einem Gemisch von wenigstens zwei dieser Dicarbonsäuren;
und wobei
das Diol ausgewählt ist aus der Gruppe bestehend aus 1,2-Ethandiol, 1,2-Propandiol, 1,3-Propandiol, 1,2-Butandiol, 1,3-Butandiol, 1,4-Butandiol, 1,2-Pentandiol, 1,3-Pentandiol, 2-Methyl-1,3-pentandiol, 1,4-Pentandiol, 1,5-Pentandiol, Neopentylglycol, 1,2-Hexandiol, 1,3-Hexandiol, 1,4-Hexandiol, 1,5-Hexandiol, 1,6-Hexandiol, Diethylenglycol, Triethylenglycol, Dipropylenglycol, Tripropylenglycol, Polyethylenglycolen mit einem Molekulargewicht in einem Bereich von 200 bis 1.000, Poylpropylenglycolen mit einem Molekulargewicht in einem Bereich von 200 bis 1.000, Hydroxypivalinsäuremononeopentylglycolester und einem Gemisch von wenigstens zwei dieser Diole.

10. Verfahren gemäß einem der vorstehenden Ansprüche, wobei die bei dem Verfahrensschritt iii) aufgebrachte Zusammensetzung umfasst:
I) 40 bis 90 Gew.-%, bezogen auf das Gesamtgewicht der Zusammensetzung, an dem thermoplastischen Polymer,
II) 10 bis 60 Gew.-%, bezogen auf das Gesamtgewicht der Zusammensetzung, an der Weichmacherzusammensetzung und
III) 0 bis 25 Gew.-%, bezogen auf das Gesamtgewicht der Zusammensetzung, an wenigstens einem Zusatzstoff, der von den Komponenten I) und II) verschieden ist, wobei die Summe der Mengen der Komponenten I), II) und III) 100 Gew.-% beträgt.

11. Verfahren gemäß einem der vorstehenden Ansprüche, wobei das lipophile verpackte Produkt ein Öl oder ein Kohlenwasserstoff oder ein Kohlenwasserstoffgemisch ist.

12. Verpackung, umfassend
- einen Behälter (1) und
- einen Verschluss (2),
wobei der Verschluss (2) eine Dichtung (3) aufweist, die aus einer Zusammensetzung hergestellt ist, die umfasst:
- ein thermoplastisches Polymer und
- eine Weichmacherzusammensetzung umfassend
-- einen polymeren Weichmacher und
-- einen Polyolester,
und wobei der Behälter (1) wenigstens teilweise mit einem lipophilen verpackten Produkt gefüllt ist und wobei der Polyolester ein Ester einer C₁-C₁₀-Monocarbonsäure und eines Diols, Triols oder Tetraols ist.

13. Verpackung gemäß Anspruch 12, wobei die Dichtung (3) in der Form eines Dichtungsrings oder in der Form einer Dichtungsscheibe an dem Verschluss (2) angebracht ist.

14. Verpackung gemäß Anspruch 12 oder 13, wobei das thermoplastische Polymer Polyvinylchlorid (PVC) ist.

15. Verpackung gemäß einem der Ansprüche 12 bis 14, wobei der Polyolester Glyceroltriacetat ist.

16. Verpackung gemäß einem der Ansprüche 12 bis 15, wobei der polymere Weichmacher ein Polyester einer Dicarbonsäure und wenigstens eines Diols ist.

17. Verpackung gemäß einem der Ansprüche 12 oder 16, wobei die lipophile Flüssigkeit ein Öl oder ein fetthaltiges Lebensmittel, ein Kohlenwasserstoff oder ein Kohlenwasserstoffgemisch ist.

## Revendications

1. Procédé de production d'un emballage qui est au moins partiellement rempli avec un produit tassé lipophile et comprend un récipient (1) et une fermeture (2) ayant un joint d'étanchéité (3), comprenant en tant qu'étapes de procédé
i) la fourniture d'un récipient (1) qui a une ouverture (4) et qui est au moins partiellement rempli d'un produit tassé lipophile ;
ii) la fourniture d'une fermeture (2) qui est adaptée pour fermer le récipient (1) ayant l'ouverture (4) ;
iii) l'application d'une composition sur au moins une partie des surfaces internes de la fermeture (2), la composition pouvant être obtenue par mélange d'un polymère thermoplastique particulaire avec une composition de plastifiant comprenant un plastifiant polymère et un ester de polyol ;
iv) le chauffage de la composition appliquée sur au moins une partie des surfaces internes de la fermeture (2) à une température qui est suffisante pour gélifier la composition ;
v) le refroidissement de la composition gélifiée ;
vi) la fermeture du récipient (1) avec la fermeture (2),
et dans lequel l'ester de polyol est un ester d'un acide monocarboxylique en C₁-C₁₀ et un diol, un triol ou un tétraol.

2. Procédé selon la revendication 1, dans lequel la fermeture (1) est une fermeture de couvercle à vis ou un bouchon-couronne.

3. Procédé selon la revendication 1 ou 2, dans lequel la composition est appliquée sur au moins une partie des surfaces internes de la fermeture (2) de sorte que dans l'étape de procédé iv), un joint d'étanchéité soit à partir formé de la composition gélifiée, ledit joint d'étanchéité, lorsque le récipient (1) est fermé, repose sur l'ouverture (4) du récipient (1).

4. Procédé selon une des revendications précédentes, dans lequel, dans l'étape de procédé iii), la composition est appliquée sur une zone circulaire ou une zone annulaire.

5. Procédé selon une des revendications précédentes, dans lequel la composition appliquée dans l'étape de procédé iii) sur au moins une partie des surfaces internes de la fermeture (2) est une composition de type pâte ayant une viscosité Brookfield, déterminée à 40 °C, dans une plage de 1 000 à 10 000 mPas.

6. Procédé selon une des revendications précédentes, dans lequel le polymère thermoplastique est le chlorure de polyvinyle (PVC).

7. Procédé selon une des revendications précédentes, dans lequel l'ester de polyol est le triacétate de glycérol.

8. Procédé selon une des revendications précédentes, dans lequel le plastifiant polymère est un polyester d'un acide dicarboxylique et d'au moins un diol.

9. Procédé selon la revendication 8, dans lequel l'acide dicarboxylique est choisi dans le groupe constitué de l'acide oxalique, l'acide malonique, l'acide succinique, l'acide glutarique, l'acide adipique, l'acide pimélique, l'acide subérique, l'acide azélaïque, l'acide sébacique, l'acide dodécanedioïque, l'acide 1,3-cyclohexanedicarboxylique, l'acide brassylique, l'acide hexahydrophtalique, l'acide téréphtalique, l'acide phtalique et un mélange d'au moins deux de ces acides dicarboxyliques ;
et dans lequel
le diol est choisi dans le groupe constitué de : 1,2-éthanediol, 1,2-propanediol, 1,3-propanediol, 1,2-butanediol, 1,3-butanediol, 1,4-butanediol, 1,2-pentanediol, 1,3-pentanediol, 2-méthyl-1,3-pentanediol, 1,4-pentanediol, 1,5-pentanediol, néopentylglycol, 1,2-hexanediol, 1,3-hexanediol, 1,4-hexanediol, 1,5-hexanediol, 1,6-hexanediol, diéthylène glycol, triéthylène glycol, dipropylène glycol, tripropylène glycol, des polyéthylène glycols ayant un poids moléculaire dans une plage de 200 à 1 000, des polypropylène glycols ayant un poids moléculaire dans une plage de 200 à 1 000, l'ester de mononéopentylglycol d'acide hydroxypivalique et un mélange d'au moins deux de ces diols.

10. Procédé selon une des revendications précédentes, dans lequel la composition appliquée dans l'étape de procédé iii) comprend
I) de 40 à 90 % en poids, sur la base du poids total de la composition, du polymère thermoplastique,
II) de 10 à 60 % en poids, sur la base du poids total de la composition, de la composition de plastifiant, et
III) de 0 à 25 % en poids, sur la base du poids total de la composition, d'au moins un additif qui diffère des composants I) et II), dans lequel la somme des quantités des composants I), II) et III) est de 100 % en poids.

11. Procédé selon une des revendications précédentes, dans lequel le produit tassé lipophile est une huile ou un hydrocarbure ou un mélange d'hydrocarbures.

12. Emballage comprenant
- un récipient (1) et
- une fermeture (2),
dans lequel la fermeture (2) a un joint d'étanchéité (3) qui est produit à partir d'une composition comprenant
- un polymère thermoplastique, et
- une composition de plastifiant comprenant
-- un plastifiant polymère et
-- un ester de polyol,
et dans lequel le récipient (1) est au moins partiellement rempli avec un produit tassé lipophile, et dans lequel l'ester de polyol est un ester d'un acide monocarboxylique en C₁-C₁₀ et un diol, un triol ou un tétraol.

13. Emballage selon la revendication 12, dans lequel le joint d'étanchéité (3) est monté sur la fermeture (2) sous la forme d'un anneau d'étanchéité ou sous la forme d'un disque d'étanchéité.

14. Emballage selon la revendication 12 ou 13, dans lequel le polymère thermoplastique est le chlorure de polyvinyle (PVC).

15. Emballage selon une des revendications 12 à 14, dans lequel l'ester de polyol est le triacétate de glycérol.

16. Emballage selon une des revendications 12 à 15, dans lequel le plastifiant polymère est un polyester d'un acide dicarboxylique et au moins un diol.

17. Emballage selon une des revendications 12 à 16, dans lequel le liquide lipophile est une huile ou une denrée alimentaire contenant des graisses, un hydrocarbure ou un mélange d'hydrocarbures.
